# EUROPEAN PATENT APPLICATION

(11) **EP 4 838 616 A1**
(43) Date of publication of application: **11.11.2026**
(21) Application number: 25751405.9
(22) Date of filing: 26.01.2025
(51) Int. Cl.: H01M 10/0587, H01M 10/0525

(54) **CONTINUOUS SHEET-FEEDING AND WINDING MECHANISM AND WINDING PROCESS THEREOF**

(30) Priority: 06.02.2024 CN 202410169137
(71) Applicant: Shenzhen Geesun Intelligent Technology Co., Ltd., Shenzhen, Guangdong 518000 (CN)
(72) Inventor: YANG, Rukun, Shenzhen, Guangdong 518000 (CN); CHEN, Fei, Shenzhen, Guangdong 518000 (CN); YANG, Ji, Shenzhen, Guangdong 518000 (CN); YAO, Bing, Shenzhen, Guangdong 518000 (CN); WU, Xueke, Shenzhen, Guangdong 518000 (CN); HE, Shiming, Shenzhen, Guangdong 518000 (CN); TAO, Shanghui, Shenzhen, Guangdong 518000 (CN); LI, Lipeng, Shenzhen, Guangdong 518000 (CN); HE, Yan, Shenzhen, Guangdong 518000 (CN); CHAO, Haoming, Shenzhen, Guangdong 518000 (CN)
(74) Representative: Del Volo, Domenico
(86) International application number: PCT/CN2025/075267
(87) International publication number: WO 2025/167805

(57) **Abstract**

The present application relates to the technical field of battery cell winding. Provided in the embodiments of the present application are a continuous sheet-feeding and winding mechanism and a winding process thereof. The winding process provided in the embodiments of the present application comprises a first bonding process, a second bonding process and a winding and cutting process, wherein the first bonding process comprises a positive electrode sheet and separator bonding process and a negative electrode sheet and separator bonding process that are performed synchronously; the second bonding process comprises bonding a positive composite layer and a negative composite layer to form a combined composite layer; and the winding and cutting process comprises feeding the combined composite layer into a winding machine at a running speed of not less than 600 mm/s for winding, and cutting same and starting to wind the next battery cell. Further provided in the present application is a continuous sheet-feeding and winding mechanism. The winding process provided in the present application can realize continuous feeding and winding at a high speed of 600 mm/s or more.

## Description

### CROSS-REFERENCE TO RELATED APPLICATION

The present invention claims priority to Chinese Patent Application No. 2024101691373, filed with the China National Intellectual Property Administration on February 6, 2024, and entitled "CONTINUOUS SHEET-FEEDING AND WINDING MECHANISM AND WINDING PROCESS THEREOF", the entire contents of which are incorporated herein by reference.

### TECHNICAL FIELD

The present invention relates to the technical field of battery winding, and in particular to a continuous sheet-feeding and winding mechanism and a winding process thereof.

### BACKGROUND

A wound-core structure is one of the main structures of existing lithium-ion power battery cells. Battery cells having this structure are generally manufactured by a winding process. The winding process, compared with a stacking process for manufacturing battery cells having a stacked-core structure, provides higher production efficiency and better control of the tension of electrode sheets and separators. In a conventional winding process, during electrode-sheet feeding and when the electrode sheets and separators are introduced into a winding machine, it is generally necessary to reduce the speed or stop the machine for feeding, so as to correct deviation and align the electrode sheets and the separators; however, this is unfavorable for improving winding efficiency. To achieve continuous winding, the prior art has proposed first bonding the electrode sheets to the separators and then performing winding. However, because the electrode sheets and separators of a wound core are relatively long, bonding the electrode sheets to the separators is difficult and costly and is unfavorable for deviation correction and alignment of the electrode sheets and the separators, and thus is difficult to apply in actual production.

### SUMMARY

An objective of the embodiments of the present invention is to provide a winding process in which sheet feeding and winding are separated, and which provides a high continuous sheet - feeding speed and high winding efficiency.

Another objective of the embodiments of the present invention is to provide a continuous sheet-feeding and winding mechanism.

In a first aspect, the present invention discloses a continuous sheet-feeding and winding process, comprising a first bonding process, a second bonding process and a winding and cutting process;
the first bonding process comprises a positive electrode sheet and separator bonding process and a negative electrode sheet and separator bonding process that are performed synchronously; the positive electrode sheet and separator bonding process comprises: bonding a head portion of a positive electrode sheet and a first separator to form a positive composite layer; and the negative electrode sheet and separator bonding process comprises: bonding a head portion of a negative electrode sheet and a second separator to form a negative composite layer, wherein the positive electrode sheet is formed by cutting a positive electrode plate, and the negative electrode sheet is formed by cutting a negative electrode plate;
the second bonding process comprises: bonding the positive composite layer and the negative composite layer to form a combined composite layer; and
the winding and cutting process comprises: feeding the combined composite layer into a winding machine for winding, cutting the combined composite layer, and starting to wind a next battery cell.

Further, in some embodiments of the present invention, in the winding and cutting process, the combined composite layer is fed into the winding machine for winding at a travel speed of not less than 600 mm/s.

Further, in some embodiments of the present invention, a bonding length of each positive electrode sheet and the first separator is not greater than 1.5 times an outer circumference of a formed battery cell.

Further, in some embodiments of the present invention, a bonding length of each negative electrode sheet and the second separator is not greater than 1.5 times an outer circumference of a formed battery cell.

Further, in some embodiments of the present invention, a bonding length of the positive composite layer and the negative composite layer is not greater than an outer circumference of a formed battery cell.

Further, in some embodiments of the present invention, a bonding area between each positive electrode sheet and the first separator does not exceed an area of an orthogonal projection of the battery cell to be obtained onto a plane extending in the width direction; and
a bonding area between each negative electrode sheet and the second separator does not exceed the area of the orthogonal projection of the battery cell to be obtained onto a plane extending in the width direction.

Further, in some embodiments of the present invention, the combined composite layer is a composite structure formed by stacking a positive electrode sheet, a first separator, a negative electrode sheet and a second separator that are sequentially arranged;
adjacent positive electrode sheets have a first spacing therebetween; adjacent negative electrode sheets have a second spacing therebetween; and projections of the first spacing and the second spacing in a direction perpendicular to the first separator and the second separator overlap in an overlapping region; and
the positive composite layer and the negative composite layer are partially bonded in the overlapping region, and a gap exists between a bonding region of the positive composite layer and the negative composite layer and a tail portion of the negative electrode sheet.

Further, in some embodiments of the present invention, the bonding region of the positive composite layer and the negative composite layer comprises a first region and a second region, wherein the first region is a part of the overlapping region; the second region comprises a region corresponding to a bonded portion of the positive electrode sheet and the first separator; and the first region and the second region are connected together.

Further, in some embodiments of the present invention, the positive composite layer and the negative composite layer corresponding to the tail portion of the positive electrode sheet and the tail portion of the negative electrode sheet are not bonded.

Further, in some embodiments of the present invention, the positive composite layer and the negative composite layer are bonded by electrostatic bonding; and/or
the head portion of the positive electrode sheet and the first separator are bonded by heat-press bonding or adhesive bonding, and the head portion of the negative electrode sheet and the second separator are bonded by heat-press bonding or adhesive bonding.

In a second aspect, the present invention further provides a continuous sheet-feeding and winding mechanism, comprising:
an unwinding device comprising a positive electrode unwinding and cutting device, a negative electrode unwinding and cutting device, a first separator unwinding device and a second separator unwinding device;
a bonding device, disposed downstream of the unwinding device and configured to bond a head portion of a positive electrode sheet with a first separator to form a positive composite layer, bond a head portion of a negative electrode sheet with a second separator to form a negative composite layer, and bond the positive composite layer and the negative composite layer to form a combined composite layer, wherein the positive electrode sheet is formed by cutting a positive electrode plate, and the negative electrode sheet is formed by cutting a negative electrode plate; and
a winding device, disposed downstream of the bonding device and configured to cut the separators and perform winding to form a battery cell;
when the positive electrode sheet/the negative electrode sheet is bonded to the first separator/the second separator, the head portion is a portion on the side close to the movement direction of the positive electrode sheet/the negative electrode sheet.

Further, in some embodiments of the present invention, the bonding device comprises a first bonding device, a second bonding device and a third bonding device, wherein the first bonding device is configured to bond a head portion of a positive electrode sheet and a first separator to form a positive composite layer;
the second bonding device is configured to bond a head portion of a negative electrode sheet and a second separator to form a negative composite layer, wherein the positive electrode sheet is formed by cutting a positive electrode plate, and the negative electrode sheet is formed by cutting a negative electrode plate; and
the third bonding device is located downstream of the first bonding device and the second bonding device and configured to bond the positive composite layer and the negative composite layer to form a combined composite layer.

Further, in some embodiments of the present invention, the first bonding device is a heat-press bonding device or an adhesive bonding device;
the second bonding device is a heat-press bonding device or an adhesive bonding device; and
the third bonding device is a heat-press bonding device or an electrostatic bonding device.

Further, in some embodiments of the present invention, the first bonding device comprises a first bonding assembly, a first driver and a first timer; the first bonding assembly comprises a first bonding member and a second bonding member, and a gap through which the positive electrode sheet and the first separator pass is provided between the first bonding member and the second bonding member; the first driver is connected to the first bonding member and drives the first bonding member to contact or move away from the first separator, such that the gap between the first bonding member and the second bonding member is not greater than the sum of the thicknesses of the positive electrode sheet and the first separator; and the first timer is configured to record the time at which the first bonding assembly contacts or moves away from the first separator;
the second bonding device comprises a second bonding assembly, a third driver and a second timer; the second bonding assembly comprises a third bonding member and a fourth bonding member, and a gap through which the negative electrode sheet and the second separator pass is provided between the third bonding member and the fourth bonding member; the third driver is connected to the third bonding member and drives the third bonding member to contact or move away from the second separator, such that the gap between the third bonding member and the fourth bonding member is not greater than the sum of the thicknesses of the negative electrode sheet and the second separator; and the second timer is configured to record the time at which the second bonding assembly contacts or moves away from the second separator; and
the third bonding device comprises a fifth bonding member, a sixth bonding member, a fifth driver, a sixth driver and a third timer, and a gap through which the positive composite layer and the negative composite layer pass is provided between the fifth bonding member and the sixth bonding member; the fifth driver is connected to the fifth bonding member and drives the fifth bonding member to contact or move away from the first separator or the positive electrode sheet; and/or the sixth driver is connected to the sixth bonding member and drives the sixth bonding member to contact or move away from the second separator, thereby bringing the first separator or the positive electrode sheet into contact with the second separator; and the third timer is configured to record the time at which the fifth bonding member contacts or moves away from the first separator or the positive electrode sheet, or the sixth bonding member contacts or moves away from the second separator.

Further, in some embodiments of the present invention, the first bonding device comprises a first heating assembly, and the first heating assembly is disposed on the first bonding assembly and configured to heat the first bonding assembly;
the second bonding device comprises a second heating assembly, the second heating assembly is disposed on the second bonding assembly and configured to heat the second bonding assembly; and
the third bonding device comprises a third heating assembly and a fourth heating assembly, and the third heating assembly and the fourth heating assembly are respectively disposed on the fifth bonding member and the sixth bonding member and configured to heat the fifth bonding member and the sixth bonding member.

Further, in some embodiments of the present invention, the first bonding device further comprises a seventh driver, and the seventh driver drives the first bonding assembly to move in the movement direction of the positive electrode sheet, with a movement speed of the first bonding assembly being equal to a movement speed of the positive electrode sheet;
the second bonding device further comprises an eighth driver, and the eighth driver drives the second bonding assembly to move in the movement direction of the negative electrode sheet, with a movement speed of the second bonding assembly being equal to a movement speed of the negative electrode sheet; and
the third bonding device comprises a ninth driver, and the ninth driver drives the fifth bonding member and the sixth bonding member to move in the movement direction of the combined composite layer, with movement speeds of the fifth bonding member and the sixth bonding member being equal to a movement speed of the combined composite layer.

Further, in some embodiments of the present invention, the mechanism further comprises a controller communicatively connected to the first bonding device, the second bonding device and the third bonding device.

Further, in some embodiments of the present invention, the positive electrode unwinding and cutting device comprises a positive electrode unwinding assembly, a first buffer assembly, a first sheet-clamping and feeding assembly and a first cutting assembly that are sequentially arranged; the positive electrode unwinding assembly unwinds the positive electrode plate to the first cutting assembly, and the first cutting assembly cuts the positive electrode plate to form positive electrode sheets; the first buffer assembly is located between the positive electrode unwinding assembly and the first cutting assembly and configured to increase a distance between adjacent positive electrode sheets; and the first sheet-clamping and feeding assembly is located between the first buffer assembly and the first cutting assembly and configured to clamp and feed the positive electrode sheets to the first cutting assembly; and
the negative electrode unwinding and cutting device comprises a negative electrode unwinding assembly, a second buffer assembly, a second sheet-clamping and feeding assembly and a second cutting assembly; the negative electrode unwinding assembly unwinds the negative electrode plate to the second cutting assembly, and the second cutting assembly cuts the negative electrode plate to form negative electrode sheets; the second buffer assembly is located between the negative electrode unwinding assembly and the second cutting assembly and configured to increase a distance between adjacent negative electrode sheets; and the second sheet-clamping and feeding assembly is located between the second buffer assembly and the second cutting assembly and configured to clamp and feed the negative electrode sheets to the second cutting assembly.

Further, in some embodiments of the present invention, a first deviation correction assembly is further disposed between the first buffer assembly and the first cutting assembly; and
a second deviation correction assembly is further disposed between the second buffer assembly and the second cutting assembly.

Further, in some embodiments of the present invention, the first separator unwinding device and the second separator unwinding device synchronously and continuously unwind at a uniform speed;
and the unwinding speeds of the first separator unwinding device and the second separator unwinding device are equal to the travel speeds of the negative composite layer and the positive composite layer in the bonding device.

Further, in some embodiments of the present invention, the unwinding speeds of the positive electrode sheet, the negative electrode sheet, the first separator and the second separator are all not less than 600 mm/s.

Beneficial effects of the present invention:
a continuous sheet-feeding and winding process provided by embodiments of the present invention adds a first bonding process and a second bonding process between an unwinding process and a winding process, and bonds a positive electrode sheet and a first separator at a head portion of the positive electrode sheet and bonds a negative electrode sheet and a second separator at a head portion of the negative electrode sheet, and then directly bonds the first separator and the second separator in a positive composite layer and a negative composite layer that are respectively formed by bonding, so as to obtain a combined composite layer in which only the head portion of the positive electrode sheet is bonded to the first separator, only the head portion of the negative electrode sheet is bonded to the second separator, and the first separator and the second separator are partially bonded between a previous negative electrode sheet and a next negative electrode sheet, such that the head portions of the positive electrode sheet and the negative electrode sheet and the first separator and the second separator are bonded into an integral whole, while tail portions of the positive electrode sheet and the negative electrode sheet still remain free, enabling the positive electrode sheet, the first separator, the negative electrode sheet and the second separator to simultaneously and uniformly enter a winding process, without needing to separately provide a sheet-feeding device for the positive electrode sheet and the negative electrode sheet, and also allowing deviation correction of the positive electrode sheet, the first separator, the negative electrode sheet and the second separator, realizing deviation correction of the positive electrode sheet and the negative electrode sheet and adjustment of tension during the winding process, and reducing tension non-uniformity and wrinkling; moreover, since only the head portion of the positive electrode sheet is bonded to the first separator and only the head portion of the negative electrode sheet is bonded to the second separator, the time and cost required for bonding the positive electrode sheet and the first separator and the time and cost required for bonding the negative electrode sheet and the second separator can also be reduced, the difficulty of bonding the electrode sheets and the separators is reduced, and the winding speed of battery cells can be increased, enabling continuous winding at a feeding speed of not less than 600 mm/s or even not less than 2000 mm/s. In addition, since the head portion of the positive electrode sheet is bonded to the first separator and the head portion of the negative electrode sheet is bonded to the second separator, it is also possible to avoid head-flapping and tail-flapping of the positive electrode sheet and the negative electrode sheet during feeding, winding and cutting and a defect of unsupported head portions of the positive electrode sheet and the negative electrode sheet after cutting.

Embodiments of the present invention further provide a continuous sheet-feeding and winding mechanism. A bonding device is disposed between an unwinding and cutting device and a winding device, and the bonding device is configured to bond a positive electrode sheet with a first separator and bond a negative electrode sheet with a second separator, and then bond the first separator and the second separator in a positive composite layer and a negative composite layer, such that the positive electrode sheet and the negative electrode sheet can be fed into a winding process along with the first separator and the second separator, realizing simultaneous and uniform feeding of the negative electrode sheet, the positive electrode sheet, the first separator and the second separator, without needing to reduce speed, start or stop, or adjust feeding speeds of the negative electrode sheet, the positive electrode sheet, the first separator and the second separator, thereby realizing continuous, uniform and high-speed feeding. Moreover, the bonding device only bonds the positive electrode sheet and the first separator, the negative electrode sheet and the second separator, and the first separator and the second separator in specific regions, and the bonding requires a relatively short time, which does not affect continuous travel of the positive electrode sheet, the negative electrode sheet, the first separator and the second separator and a combined composite layer formed therefrom, and the bonding has a low difficulty and is easy to implement and adopt. The continuous sheet-feeding and winding mechanism provided by embodiments of the present invention can realize continuous sheet-feeding and winding of the positive electrode sheet, the negative electrode sheet, the first separator and the second separator at a speed of not less than 600 mm/s, and can even realize continuous sheet-feeding and winding at a speed of not less than 2000 mm/s.

### BRIEF DESCRIPTION OF THE DRAWINGS

FIG. 1 is a schematic diagram of a continuous sheet-feeding and winding process according to some embodiments of the present invention;
FIG. 2 is a partially enlarged view of FIG. 1; and
FIG. 3 is a schematic structural diagram of a bonding device used in a continuous sheet-feeding and winding process according to some embodiments of the present invention.

Reference numerals: A - first spacing, B - second spacing, C - overlapping region, 1 - positive electrode unwinding assembly, 2 - first buffer assembly, 3 - first deviation correction assembly, 4 - first sheet-clamping and feeding assembly, 5 - first cutting assembly, 6 - first bonding device, 61 - positive electrode sheet, 62 - negative electrode sheet, 611 - first bonding roller, 612 - first rotary motor, 613 - first driver, 614 - first screw rod assembly, 621 - second bonding roller, 622 - second rotary motor, 623 - second driver, 624 - second screw rod assembly, 7 - first separator unwinding device, 71 - first separator, 72 - second separator, 8 - negative electrode unwinding assembly, 9 - second buffer assembly, 10 - second deviation correction assembly, 11 - second separator unwinding device, 12 - second sheet-clamping and feeding assembly, 13 - second cutting assembly, 14 - second bonding device, 15 - first electrostatic generator, 16 - second electrostatic generator, 17 - third bonding device, 18 - winding device, 19 - cutting device.

### DETAILED DESCRIPTION OF THE EMBODIMENTS

To explain the present invention more clearly, the present invention is described in detail below with reference to embodiments, and the main subject matter of the present invention is further explained in conjunction with specific embodiments. However, the content of the present invention is not limited to the following embodiments.

In the description of the present invention, it should be understood that the orientations or positional relationships indicated by terms such as "thickness", "upper" and "lower" are based on the orientations or positional relationships shown in the drawings and are used only to facilitate and simplify the description of the present invention, rather than to indicate or imply that a referenced device or element must have a particular orientation or be constructed and operated in a particular orientation. Therefore, such terms should not be construed as limiting the present invention. In addition, unless otherwise expressly and specifically defined, "a plurality of" means two or more.

The following disclosure provides various embodiments or examples for implementing different structures of the present invention. to simplify the disclosure, components and arrangements of specific examples are described below. These are merely examples and are not intended to limit the present invention. In addition, reference numerals and/or reference letters may be repeated in different examples. such repetition is for simplicity and clarity and does not itself indicate any relationship between the various embodiments and/or arrangements discussed. Furthermore, the present invention provides examples of various specific processes and materials, but a person of ordinary skill in the art will appreciate that other processes and/or materials may be used.

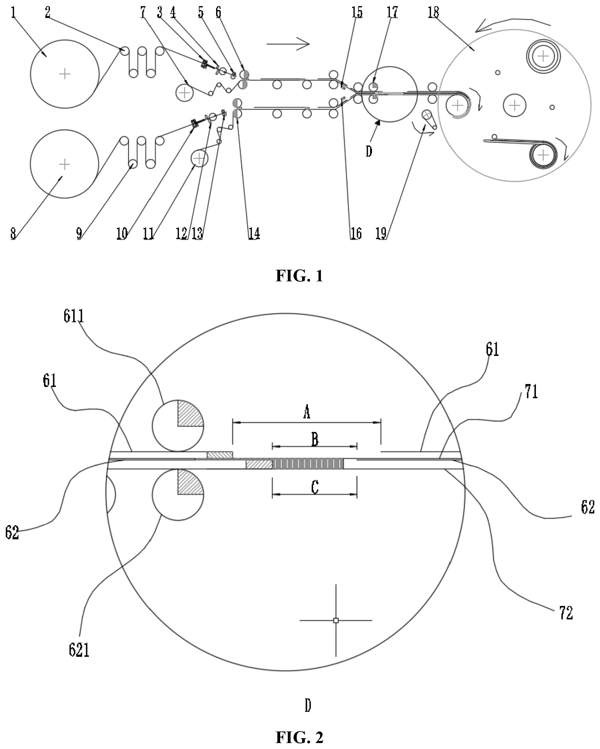

The present invention discloses a continuous sheet-feeding and winding process. Referring to FIG. 1, the process comprises a first bonding process, a second bonding process and a winding and cutting process;
the first bonding process comprises a positive electrode sheet and separator bonding process and a negative electrode sheet and separator bonding process that are performed synchronously; the positive electrode sheet and separator bonding process comprises: bonding a head portion of a positive electrode sheet and a first separator to form a positive composite layer; and the negative electrode sheet and separator bonding process comprises: bonding a head portion of a negative electrode sheet and a second separator to form a negative composite layer; wherein the positive electrode sheet is formed by cutting a positive electrode plate; and the negative electrode sheet is formed by cutting a negative electrode plate; and
the second bonding process comprises bonding the positive composite layer and the negative composite layer to form a combined composite layer; and the winding and cutting process comprises feeding the combined composite layer into a winding machine for winding, cutting the combined composite layer, and starting to wind a next battery cell.

Preferably, in the winding and cutting process, the combined composite layer is fed into the winding machine for winding at a travel speed of not less than 600 mm/s.

More Preferably, in the winding and cutting process, the combined composite layer is fed into the winding machine for winding at a travel speed of not less than 1000 mm/s; and still more preferably, in the winding and cutting process, the combined composite layer is fed into the winding machine for winding at a travel speed of not less than 2000 mm/s.

It should be noted that, before the first bonding process, the continuous sheet feeding-and-winding process provided by the present invention further comprises a positive electrode sheet-unwinding and cutting process, a negative electrode sheet-unwinding and cutting process, a first separator unwinding process and a second separator unwinding process. The above four processes are performed synchronously, such that the cut positive and negative electrode sheets and the continuous first and second separators simultaneously enter the first bonding process.

The positive electrode sheet-unwinding and cutting process comprises unwinding a positive electrode plate by means of a positive electrode unwinding device and cutting the positive electrode plate to form positive electrode sheets having a predetermined length. During cutting of the positive electrode sheets, a buffer device disposed upstream of the cutting process is used to create a first spacing having a predetermined length between a cut positive electrode sheet and the remaining positive electrode plate.

The negative electrode sheet-unwinding and cutting process comprises unwinding a negative electrode plate by means of a negative electrode unwinding device and cutting the negative electrode plate to form negative electrode sheets having a predetermined length. During cutting of the negative electrode sheets, a buffer device disposed upstream of the cutting process is used to create a second spacing having a predetermined length between a cut negative electrode sheet and the remaining negative electrode plate.

The positive electrode sheet-unwinding and cutting process further comprises deviation correction of the positive electrode plate. After passing through the buffer device, the positive electrode plate undergoes deviation correction before entering the cutting process. The negative electrode sheet-unwinding and cutting process further comprises deviation correction of the negative electrode plate. After passing through the buffer device, the negative electrode plate undergoes deviation correction before entering the cutting process, such that the cut positive electrode sheets are aligned with the first separator and the cut negative electrode sheets are aligned with the second separator.

In the present invention, the unwinding speed of the positive electrode plate, the unwinding speed of the negative electrode plate, the unwinding speed of the first separator and the unwinding speed of the second separator can all be not less than 600 mm/s, and the first separator and the second separator are continuously unwound at a uniform speed; the positive electrode plate and the negative electrode plate are also continuously unwound at a uniform speed, but the unwinding speed thereof is slightly lower than the unwinding speeds of the first separator and the second separator; the difference between the unwinding speeds of the first separator and the second separator and the unwinding speeds of the positive electrode plate and the negative electrode plate can be adjusted according to the length of the first spacing between adjacent positive electrode sheets and the length of the second spacing between adjacent negative electrode sheets. Moreover, since the head portion of the positive electrode sheet is bonded to the first separator and the head portion of the negative electrode sheet is bonded to the second separator, the positive electrode sheet and the first separator and the negative electrode sheet and the second separator can be synchronously pulled forward, enabling the winding speed and sheet feeding speed to be further increased; the unwinding speed of the positive electrode plate, the unwinding speed of the negative electrode plate, the unwinding speed of the first separator and the unwinding speed of the second separator can all be increased to not less than 1000 mm/s, and can even be increased to not less than 2000 mm/s, and continuous sheet feeding and winding can still be achieved.

In addition, the other process parameters of the positive electrode sheet-unwinding and cutting process, the negative electrode sheet-unwinding and cutting process, the first separator unwinding process and the second separator unwinding process are conventional in the art and therefore will not be described in detail herein.

In some embodiments, a bonding length between each positive electrode sheet and the first separator is not greater than 1.5 times the outer circumference of a battery cell thus formed, and a bonding length between each negative electrode sheet and the second separator is not greater than 1.5 times the outer circumference of the battery cell thus formed. The bonding length between the positive electrode sheet and the first separator should be neither excessively long nor excessively short. If the bonding length is excessively long, the bonding operation is difficult and time-consuming, making practical production difficult, and the travel speed of the positive electrode sheet and the first separator is significantly affected and difficult to increase. In addition, an excessively long bonding length greatly restricts the freedom of the tail end of the positive electrode sheet, prevents its thickness from being adjusted by deviation correction, and prevents the tension from being freely adjusted during winding, which may readily cause wrinkling and affect battery-cell performance. If the bonding length is excessively short, the bonding force between the positive electrode sheet and the first separator may be insufficient, and separation may readily occur during travel, making it difficult to achieve bonding, synchronous travel, and prevention of an unsupported or flapping head portion. Likewise, the bonding length between the negative electrode sheet and the second separator should be neither excessively long nor excessively short.

Preferably, the bonding length between each positive electrode sheet and the first separator is not greater than one battery-cell width; and the bonding length between each negative electrode sheet and the second separator is not greater than two battery-cell widths, and more preferably is not greater than one width of the battery cell thus formed.

In some embodiments, a bonding length of the positive composite layer and the negative composite layer is not greater than an outer circumference of a formed battery cell.

In some embodiments, a bonding area between each positive electrode sheet and the first separator does not exceed the area of the orthogonal projection of the battery cell to be obtained onto a plane extending in the width direction; and a bonding area between each negative electrode sheet and the second separator does not exceed the area of the orthogonal projection of the battery cell to be obtained onto a plane extending in the width direction. This ensures synchronous travel of the positive and negative electrode sheets and the first and second separators bonded thereto and prevents the head portions from being unsupported or flapping after winding and cutting, while maintaining the tail portions of the positive and negative electrode sheets as free ends to permit deviation correction and tension adjustment and avoid wrinkling.

In some embodiments, the combined composite layer is a composite structure formed by stacking a positive electrode sheet, a first separator, a negative electrode sheet and a second separator that are sequentially arranged; adjacent positive electrode sheets have a first spacing therebetween; adjacent negative electrode sheets have a second spacing therebetween; and the first spacing and the second spacing have an overlapping region in projections in a direction perpendicular to the first separator and the second separator; and the positive composite layer and the negative composite layer are partially bonded in the overlapping region, and a gap exists between a bonding region of the positive composite layer and the negative composite layer and a tail portion of the negative electrode sheet.

It should be noted that, as shown in FIG. 2, the projections of the first spacing A and the second spacing B in a direction perpendicular to the first separator and the second separator overlap in an overlapping region C. In the present invention, "the positive composite layer and the negative composite layer are partially bonded in the overlapping region" means that the bonding region of the positive composite layer and the negative composite layer includes part of the overlapping region; that is, the projection of the bonding region in the direction perpendicular to the first separator and the second separator partially overlaps the projections of the first spacing A and the second spacing B in that direction.

In the present invention, the first separator 71 and the second separator 72 are directly bonded, and a certain gap exists between the bonding region of the first separator 71 and the second separator 72 and the tail portions of the positive electrode sheet 61 and the negative electrode sheet 62, such that the tail portions of the positive electrode sheet 61 and the negative electrode sheet 62 are maintained in a free end state, that is, the positive composite layer and the negative composite layer corresponding to the tail portion of the positive electrode sheet and the tail portion of the negative electrode sheet are not bonded. The length of the gap here can be set according to requirements, as long as the tail portions of the positive electrode sheet 61 and the negative electrode sheet 62 are maintained in a free end state.

During cutting, the combined composite layer is cut at a bonded portion at which the first separator and the second separator are directly bonded, thereby separating two successively wound battery cells. Because the first separator and the second separator are bonded together, the head portion of the positive electrode sheet is bonded to the first separator, and the head portion of the negative electrode sheet is bonded to the second separator, the head portions of the positive electrode sheet, the first separator, the negative electrode sheet and the second separator from which winding starts after cutting can be regarded as an integral whole, and the positive and negative electrode sheets will not be unsupported or flap. Moreover, because the first and second separators are bonded together, after cutting, the first and second separators of a completed wound core can be regarded as an integral whole, thereby reducing tailflapping.

In some embodiments, the bonding region of the positive composite layer and the negative composite layer comprises a first region and a second region, the first region is part of the overlapping region, and the second region comprises a region corresponding to a bonded portion of the positive electrode sheet and the first separator. The first region and the second region are connected, as shown in FIG. 2, so as to increase the bonding strength and integrity of the head portion of the positive electrode sheet, the first separator, the head portion of the negative electrode sheet and the second separator, allowing them to be pulled and transported as an integral whole.

In some embodiments, the positive composite layer and the negative composite layer are bonded by electrostatic bonding; the head portion of the positive electrode sheet and the first separator are bonded by heat-press bonding or adhesive bonding, and the head portion of the negative electrode sheet and the second separator are bonded by heat-press bonding or adhesive bonding.

The present invention further provides a continuous sheet-feeding and winding mechanism capable of implementing the above continuous sheet-feeding and winding process, the mechanism comprises an unwinding device, a bonding device and a winding device 18.

The unwinding device comprises a positive electrode unwinding and cutting device, a negative electrode unwinding and cutting device, a first separator unwinding device and a second separator unwinding device; the positive electrode unwinding and cutting device is configured to unwind a positive electrode plate and cut the positive electrode plate to form positive electrode sheets of a required length; the negative electrode unwinding and cutting device is configured to unwind a negative electrode plate and cut the negative electrode plate to form negative electrode sheets of a required length; and the first separator unwinding device is configured to unwind a first separator, and the second separator unwinding device is configured to unwind a second separator.

The positive electrode unwinding and cutting device may have the following structure: a positive electrode unwinding assembly 1, a first buffer assembly 2, a first sheet-clamping and feeding assembly 4 and a first cutting assembly 5 that are sequentially arranged; the positive electrode unwinding assembly unwinds the positive electrode plate toward the first cutting assembly, and the first cutting assembly cuts the positive electrode plate to form positive electrode sheets; the first buffer assembly is located between the positive electrode unwinding assembly and the first cutting assembly and is configured to increase a spacing between adjacent positive electrode sheets; and the first sheet-clamping and feeding assembly is located between the first buffer assembly and the first cutting assembly and is configured to clamp and feed the positive electrode sheets to the first cutting assembly.

The negative electrode unwinding and cutting device may have the following structure: a negative electrode unwinding assembly 8, a second buffer assembly 9, a second sheet-clamping and feeding assembly 12 and a second cutting assembly 13; the negative electrode unwinding assembly unwinds the negative electrode plate to the second cutting assembly, and the second cutting assembly cuts the negative electrode plate to form negative electrode sheets; the second buffer assembly is located between the negative electrode unwinding assembly and the second cutting assembly and is configured to increase a distance between adjacent negative electrode sheets; and the second sheet-clamping and feeding assembly is located between the second buffer assembly and the second cutting assembly and is configured to clamp and feed the negative electrode sheets to the second cutting assembly. The positive electrode unwinding assembly, the first buffer assembly, the first sheet-clamping and feeding assembly, the first cutting assembly, the negative electrode unwinding assembly, the second buffer assembly, the second sheet-clamping and feeding assembly, the second cutting assembly, the first separator unwinding device 7, the second separator unwinding device 11, the first deviation correction assembly and the second deviation correction assembly are all prior art, and specific structures thereof will not be described in detail herein.

Preferably, a first deviation correction assembly 3 is further disposed between the first buffer assembly 2 and the first cutting assembly 5 and configured to perform deviation correction of positive electrode sheets; a second deviation correction assembly 10 is further disposed between the second buffer assembly 9 and the second cutting assembly 13 and configured to perform deviation correction of negative electrode sheets.

The bonding device is disposed downstream of the unwinding device. After being cut, the positive electrode sheets and the negative electrode sheets are fed into the bonding device, and the first separator and the second separator are also fed into the bonding device by the first separator unwinding device and the second separator unwinding device, such that the head portion of the positive electrode sheet is bonded to the first separator to form a positive composite layer and the head portion of the negative electrode sheet is bonded to the second separator to form a negative composite layer; the positive composite layer and the negative composite layer are then bonded to form a combined composite layer.

Specifically, the bonding device comprises a first bonding device 6, a second bonding device 14 and a third bonding device 17. The first bonding device is configured to bond the head portion of the positive electrode sheet to the first separator to form a positive composite layer; the second bonding device is configured to bond the head portion of the negative electrode sheet to the second separator to form a negative composite layer; and the third bonding device is located downstream of the first bonding device and the second bonding device and is configured to bond the positive composite layer and the negative composite layer to form a combined composite layer.

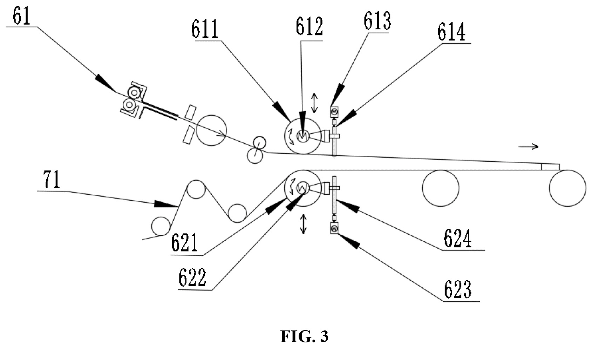

Referring to FIG. 3, the first bonding device 6 comprises a first bonding roller group, a first driver 613, a second driver 623 and a first timer. The first bonding roller group comprises a first bonding roller 611 and a second bonding roller 621, and a gap through which the positive electrode sheet 61 and the first separator 71 pass is provided between the first bonding roller and the second bonding roller. The first driver is connected to the first bonding roller and drives the first bonding roller to contact or move away from the first separator; the second driver is connected to the second bonding roller and drives the second bonding roller to contact or move away from the first separator, such that the gap between the first bonding roller and the second bonding roller is not greater than the sum of the thicknesses of the positive electrode sheet and the first separator. The first timer is configured to record the time at which the first bonding roller group contacts or moves away from the first separator; and it should also be noted that a first bonding roller 611 and the second bonding roller 621 are respectively provided with a first rotary motor 612 and a second rotary motor 622 respectively configured to drive the first bonding roller and the second bonding roller to rotate. In some examples, the first driver 613 drives the first bonding roller 611 to reciprocate through a first screw rod assembly 614; similarly, the second driver 623 drives the second bonding roller 621 to reciprocate through a second screw rod assembly 624.

The second bonding device comprises a second bonding roller group, a third driver, a fourth driver and a second timer. The second bonding roller group comprises a third bonding roller and a fourth bonding roller, and a gap through which the negative electrode sheet and the second separator pass is provided between the third bonding roller and the fourth bonding roller. The third driver is connected to the third bonding roller and drives the third bonding roller to contact or move away from the second separator; the fourth driver is connected to the fourth bonding roller and drives the fourth bonding roller to contact or move away from the second separator, such that the gap between the third bonding roller and the fourth bonding roller is not greater than the sum of the thicknesses of the negative electrode sheet and the second separator. The second timer is configured to record the time at which the second bonding roller group contacts or moves away from the second separator.

The third bonding device comprises a fifth bonding roller, a sixth bonding roller, a fifth driver, a sixth driver and a third timer, and a gap through which the positive composite layer and the negative composite layer pass is provided between the fifth bonding roller and the sixth bonding roller. The fifth driver is connected to the third bonding roller, the sixth driver and the sixth bonding roller, and drives the fifth bonding roller to contact or move away from the first separator or the negative electrode sheet; the sixth bonding roller is driven to contact or move away from the second separator; and the first separator or the negative electrode sheet is driven to contact with the second separator. The third timer is configured to record the time at which the fifth bonding roller contacts or moves away from the first separator or the positive electrode sheet, or the time at which the sixth bonding roller contacts or moves away from the second separator.

Similarly, the third bonding roller, the fourth bonding roller, the fifth bonding roller and the sixth bonding roller are each provided with a rotary motor configured to drive rotation thereof; since driving a roller to rotate is known in the art, it will not be described in detail herein. Similarly, reciprocating movement of the third bonding roller, the fourth bonding roller, the fifth bonding roller and the sixth bonding roller can also be achieved by connecting screw rod assemblies to corresponding drivers thereof, and the drivers respectively drive the third bonding roller, the fourth bonding roller, the fifth bonding roller and the sixth bonding roller to reciprocate along corresponding screw rods thereof. Since a driver driving a device to move along a screw rod assembly is known in the art, it will not be described in detail herein.

At least the first bonding roller, the third bonding roller, the fifth bonding roller and the sixth bonding roller are made of a high-resistance conductor or a thermally conductive material and can generate heat when energized or be connected to a high-temperature heat source, so that their temperature is relatively high. When the first bonding roller contacts the first separator, the temperature of the first separator can be increased; meanwhile, the first driver causes the head portion of the positive electrode sheet to be pressed against the first separator, thereby achieving heat-press bonding of the head portion of the positive electrode sheet and the first separator. Because the positive electrode sheet and the first separator move simultaneously at the same uniform speed during this process, their relative positions do not change. When the heat-press bonding length between the positive electrode sheet and the first separator reaches a required length, the first driver drives the first bonding roller away from the first separator, so that the first separator is no longer heated and the first bonding roller no longer heat-presses the positive electrode sheet and the first separator, thereby achieving partial bonding thereof. Because the first separator and the positive electrode sheet travel at a uniform speed during this process, the first timer records the period for which the first bonding roller heat-presses the first separator and the positive electrode sheet. By controlling the time interval between the first bonding roller approaching and moving away from the first separator, the bonding length between the positive electrode sheet and the first separator can be controlled. Moreover, because the travel speed is uniform during bonding and the spacing between adjacent positive electrode sheets is controllable, the time for each positive electrode sheet to pass the second bonding roller is approximately constant. Therefore, by controlling the interval between two contacts of the first bonding roller with the first separator driven by the first driver, the bonding position between a subsequent positive electrode sheet and the first separator can be controlled at the head portion of the positive electrode sheet. When the positive electrode sheet/the negative electrode sheet is bonded to the first separator/the second separator, the head portion is a portion on the side close to the movement direction of the positive electrode sheet/the negative electrode sheet.

Preferably, the first bonding device further comprises an image acquisition device configured to collect a position of the positive electrode sheet and provide information for controlling the first driver to drive the first bonding roller to move. The image acquisition device may be a CCD camera, and the first driver may be an existing motor, air pump, hydraulic pump or the like.

Similarly, when the third bonding roller contacts the second separator, the temperature of the second separator can be increased; meanwhile, the third driver causes the head portion of the negative electrode sheet to be pressed against the second separator, thereby achieving heat-press bonding of the head portion of the negative electrode sheet and the second separator. Because the negative electrode sheet and the second separator move simultaneously at the same uniform speed during this process, their relative positions do not change. When the heat-press bonding length between the negative electrode sheet and the second separator reaches a required length, the third driver drives the third bonding roller away from the second separator, so that the second separator is no longer heated and the third bonding roller no longer heat-presses the negative electrode sheet and the second separator, thereby achieving partial bonding thereof. Because the second separator and the negative electrode sheet travel at a uniform speed during this process, the second timer records the period for which the third bonding roller heat-presses the second separator and the negative electrode sheet. By controlling the time interval between the third bonding roller approaching and moving away from the second separator, the bonding length between the negative electrode sheet and the second separator can be controlled. Moreover, because the travel speed is uniform during bonding and the spacing between adjacent negative electrode sheets is controllable, the time for each negative electrode sheet to pass the fourth bonding roller is approximately constant. Therefore, by controlling the interval between two contacts of the third bonding roller with the second separator, the bonding position between a subsequent negative electrode sheet and the second separator can be controlled at the head portion of the negative electrode sheet.

Preferably, the second bonding device further comprises an image acquisition device configured to collect a position of the negative electrode sheet and provide information for controlling the third driver to drive the third bonding roller to move and/or controlling the fourth driver to drive the fourth bonding roller to move. The image acquisition device can be a CCD camera, and the third driver may be an existing motor, air pump, hydraulic pump or the like.

Similarly, when the fifth bonding roller contacts the first separator and the sixth bonding roller contacts the second separator, the temperature of the first separator and the second separator can be increased. Meanwhile, the fifth driver drives the fifth bonding roller and the sixth bonding roller to approach each other, so that the first separator and the second separator press against each other, thereby achieving heat-press bonding of the first separator and the second separator. Since in this process the first separator and the second separator are both moving at a uniform speed at the same time, the relative positions thereof do not change. When the heat-press bonding length of the first separator and the second separator reaches a required length, the fifth driver and the sixth driver simultaneously drive the fifth bonding roller and the sixth bonding roller to respectively separate from the first separator and the second separator, the first separator and the second separator are no longer heated, and the fifth bonding roller and the sixth bonding roller no longer heat-press the first separator and the second separator, so that the first separator and the second separator are not bonded, thereby achieving partial bonding of the first separator and the second separator. Since in this process the first separator and the second separator are both in a state of uniform running speed, The third timer records a time at which the fifth bonding roller and the sixth bonding roller move to heat-press the first separator and the second separator, and by controlling a time difference between the fifth driver driving the fifth bonding roller to approach the first separator and separate from the first separator and the sixth driver driving the sixth bonding roller to approach the first separator and separate from the first separator, the bonding length of the first separator and the second separator of a determined length can be controlled. Meanwhile, since the running speed is uniform during the bonding process of the first separator and the second separator, and the spacing between adjacent negative electrode sheets and positive electrode sheets is controllable, the duration for which each negative electrode sheet passes through a gap between the fifth bonding roller and the sixth bonding roller is approximately constant; therefore, by controlling a time interval between two contacts of the fifth bonding roller and the sixth bonding roller with the first separator and the second separator respectively driven by the fifth driver and the sixth driver, the bonding position of a subsequent first separator and second separator can be controlled to be between two adjacent positive electrode sheets and negative electrode sheets.

Preferably, the third bonding device further comprises an image acquisition device configured to collect positions of the first separator and the second separator where no positive electrode sheet or negative electrode sheet is bonded, and provide information for controlling the fifth driver and the sixth driver to respectively drive the fifth bonding roller and the sixth bonding roller to move. The image acquisition device can be a CCD camera, and the fifth driver and the sixth driver may be existing motors, air pumps, hydraulic pumps or the like.

The winding device is disposed downstream of the bonding device and is configured to cut the separators and perform winding to form a battery cell. The winding device comprises a separator continuous-winding head and a cutting device 19. The separator continuous-winding head comprises three winding heads and is capable of switching among the three winding heads. During winding-head switching, the web path extends along a surface of a winding head and does not need to enter the center of a winding needle. While the web travels at a uniform speed, the cutting device can continuously perform in-line flying cutting, at a uniform speed, on a separator segment on the winding surface (when a separator segment between battery cells passes over the surface of the winding needle) and hold by suction the head portion of an inner separator. Because an outer separator has been bonded to the inner separator in the preceding bonding process to form a composite separator segment, battery cells can be separated at high speed during switching and winding of a next battery cell can be started. The winding device may employ the winding-head assembly disclosed in CN115000529A; however, compared with the winding-head assembly disclosed in that patent, the winding device used in the present invention may omit the separator bonding and laminating mechanism. Therefore, the specific structure of the winding device will not be described in detail herein.

In other embodiments, heating assemblies can also be respectively disposed on at least the first bonding roller, the third bonding roller, the fifth bonding roller and/or the sixth bonding roller; for example, a first heating assembly is disposed on the first bonding roller, a second heating assembly is disposed on the third bonding roller, a third heating assembly is disposed on the fifth bonding roller and/or a fourth heating assembly is disposed on the sixth bonding roller, configured to heat corresponding bonding portions. It should be noted that heating assemblies may be disposed on both the fifth bonding roller and the sixth bonding roller, or only one heating assembly may be disposed; preferably, heating assemblies are disposed on both the fifth bonding roller and the sixth bonding roller, so that tension, damping, inertia, and static and dynamic friction forces of the first separator and the second separator during bonding are approximately equal, improving the quality and stability of a wound core.

The heating assemblies can be existing heating assemblies, such as a flexible heating sheet connected to an external power source or an array of heating wires. The first bonding roller, the third bonding roller, the fifth bonding roller and the sixth bonding roller can be existing heat-press rollers capable of timed heating.

In some embodiments, the third bonding device can alternatively be an electrostatic bonding device. In this case, the third bonding device comprises a fifth bonding roller, a sixth bonding roller, a fifth driver, a sixth driver, a third timer, a first electrostatic generator 15 and a second electrostatic generator 16. The first and second electrostatic generators are located upstream of the fifth and sixth bonding rollers and are configured to impart charges of different polarities to the first and second separators. A gap through which the positive composite layer and the negative composite layer pass is provided between the fifth and sixth bonding rollers. The fifth driver is connected to the fifth bonding roller and drives the fifth bonding roller to contact or move away from the first separator or the positive electrode sheet; the sixth driver is connected to the sixth bonding roller and drives the sixth bonding roller to contact or move away from the second separator, thereby bringing the first separator or the negative electrode sheet into contact with the second separator. The third timer is configured to record the time at which the fifth bonding roller contacts or moves away from the first separator or the positive electrode sheet, or he time at which the sixth bonding roller contacts or moves away from the second separator.

The first electrostatic generator and the second electrostatic generator can be conventional electrostatic generators and therefore will not be described in detail herein.

In other embodiments, the first bonding assembly in the first bonding device can be a first fixed plate and a first movable plate, the first bonding device comprises a first driver and a seventh driver, and a spacing through which the positive electrode sheet and the first separator pass is disposed between the first fixed plate and the first movable plate; the first driver is connected to the first movable plate and drives the first movable plate to contact or move away from the first separator, and causes a spacing between the first movable plate and the first fixed plate to be not greater than the sum of the thicknesses of the positive electrode sheet and the first separator; the first timer is configured to record the time at which the first bonding plate group contacts or moves away from the first separator; the seventh driver drives the first bonding assembly to move in the movement direction of the positive electrode sheet, and a movement speed of the first bonding assembly is equal to a movement speed of the positive electrode sheet; the first movable plate is a heatable heating member or a heating assembly is disposed on the first movable plate; in a process in which the first separator and the positive electrode sheet move forward, the first movable plate and the first fixed plate press against the first separator and the positive electrode sheet and maintain relative positions unchanged for a certain time, and bonding of the first separator and the positive electrode sheet is achieved by heating through heat pressing; and a bonding length and a bonding region of the first separator and the positive electrode sheet can be controlled more precisely, and the bonding strength is better.

Similarly, the second bonding assembly in the second bonding device can comprise a second fixed plate and a second movable plate. The second bonding device comprises a third driver and an eighth driver, and a gap through which the negative electrode sheet and the second separator pass is provided between the second fixed plate and the second movable plate. The second driver is connected to the second movable plate and drives the second movable plate to contact or move away from the second separator, such that the gap between the second movable plate and the second fixed plate is not greater than the sum of the thicknesses of the negative electrode sheet and the second separator. The second timer is configured to record the time at which the second bonding plate group contacts or moves away from the second separator. The eighth driver drives the second bonding assembly to move in the movement direction of the negative electrode sheet, with the movement speed of the second bonding assembly being equal to the movement speed of the negative electrode sheet. The second movable plate is a heatable member, or a heating assembly is disposed on the second movable plate. As the second separator and the negative electrode sheet move forward, the second movable plate and the second fixed plate press the second separator and the negative electrode sheet together and maintain unchanged relative positions for a period of time, thereby heat-press bonding the second separator and the negative electrode sheet. The bonding length and bonding region can thus be controlled more accurately, and the bonding strength is improved.

Similarly, the third bonding device comprises a ninth driver and a tenth driver, and a spacing through which the first separator and the second separator pass is disposed between the third bonding plate and the fourth bonding plate; the ninth driver is connected to the third bonding plate and the fourth bonding plate and drives the third bonding plate and the fourth bonding plate to contact or move away from the first separator and the second separator, and causes a spacing between the fourth bonding plate and the third bonding plate to be not greater than the sum of the thicknesses of the first separator and the second separator; the third timer is configured to record the time at which the third bonding plate group contacts or moves away from the second separator; the tenth driver drives the third bonding plate and the fourth bonding plate to move in the movement direction of the combined composite layer, and a movement speed of the third bonding plate and the fourth bonding plate is equal to a movement speed of the combined composite layer. The third bonding plate and the fourth bonding plate can both be heatable heating members, or heating assemblies can be disposed on the third bonding plate and the fourth bonding plate; in a process in which the second separator and the first separator move forward, the fourth bonding plate and the third bonding plate press against the second separator and the first separator and maintain relative positions unchanged for a certain time, and bonding of the second separator and the first separator is achieved by heating through heat pressing; and a bonding length and a bonding region of the second separator and the first separator can be controlled more precisely, and the bonding strength is better.

In some embodiments, the mechanism further comprises a controller communicatively connected to the first bonding device, the second bonding device and the third bonding device. The communication can be wireless or electrical. The controller can be any conventional control unit capable of acquiring information, processing data, making determinations and issuing instructions, such as a microcontroller.

In some embodiments, a third deviation correction device is further disposed upstream of the winding device and downstream of the bonding device. the third deviation correction device is configured to simultaneously correct deviation of the positive electrode sheet and the negative electrode sheet, such that the structural layers formed by stacking the positive electrode sheet, the first separator, the negative electrode sheet and the second separator are aligned. The third deviation correction device is conventional in the art, and its specific structure will not be described in detail herein.

The continuous sheet-feeding and winding mechanism according to this embodiment operates as follows.

The positive electrode unwinding and cutting device continuously unwinds a positive electrode plate and cuts the corresponding electrode plate to form positive electrode sheets of a length required for a battery cell; during unwinding of the positive electrode plate, the first buffer assembly located between the positive electrode unwinding assembly and the first cutting assembly increases a spacing between a cut positive electrode sheet and an uncut positive electrode plate through a buffer roller group, and this spacing is a first spacing; meanwhile, the negative electrode unwinding and cutting device continuously unwinds a negative electrode plate and cuts the corresponding electrode plate to form negative electrode sheets of a length required for a battery cell; during unwinding of the negative electrode plate, the second buffer assembly located between the negative electrode unwinding assembly and the second cutting assembly increases a spacing between a cut negative electrode sheet and an uncut negative electrode plate through a buffer roller group, and this spacing is a second spacing.

Meanwhile, the first separator unwinding device and the second separator unwinding device simultaneously unwind the first separator and the second separator respectively; the first bonding device bonds the head portion of the positive electrode sheet to the first separator to form a first composite segment, and the first composite segment serves as a traction point so that a positive composite layer formed by the positive electrode sheet 61 and the first separator 71 can be synchronously pulled; the second bonding device bonds the head portion of the negative electrode sheet 62 to the second separator 72 to form a second composite segment, and the second composite segment serves as a traction point so that a negative composite layer formed by the negative electrode sheet 62 and the second separator 72 can be synchronously pulled; then, under the driving of the first separator 71 and the second separator 72, the positive electrode sheet 61 and the negative electrode sheet 62 synchronously and uniformly move forward side by side, enter the third bonding device, and under the action of the third bonding device, the first separator 71 and the second separator 72 are bonded to form a combined composite layer, so that the head portions of the positive composite layer and the negative composite layer are bonded together, while the tail portions still maintain a free end state, allowing subsequent deviation correction; the bonded positive composite layer and negative composite layer are synchronously fed into the winding device after deviation correction, and are wound and flying-cut at a position where the first separator and the second separator are bonded, so that two successive battery cells are separated. Since the first separator and the second separator are directly bonded together, and a subsequent flying-cut position is a position where the first separator and the second separator are bonded, positive electrode sheets and negative electrode sheets do not need to be cut during the flying-cut process, thereby avoiding powder dispersion caused by flying cutting of the positive electrode sheets and the negative electrode sheets. Since the first separator and the second separator are originally bonded together, and the positive electrode sheets and the first separator and the negative electrode sheets and the second separator are also bonded together, layer displacement does not occur during the flying-cut process, and the positive electrode sheets and the negative electrode sheets are not unsupported. Since the layer structures (positive electrode sheet, first separator, negative electrode sheet, second separator) are originally bonded together before entering the winding device, the feeding speeds of the respective layers can be maintained substantially identical, and the spacing between positive electrode sheets and between negative electrode sheets has been adjusted, so there is no need to reduce the speed or stop to adjust the positions and speed differences between the positive electrode sheet and the first separator, the negative electrode sheet and the second separator, and the positive electrode sheet and the negative electrode sheet, thereby achieving continuous and uniform winding and flying cutting. In addition, in the present invention, the positive electrode sheet and the first separator and the negative electrode sheet and the second separator are bonded only at their head portions, the bonding requires a relatively short time, and non-stop bonding can be achieved in a relatively small area when the positive electrode sheet and the first separator and the negative electrode sheet and the second separator move forward at a high speed, without needing to reduce the speed or stop to provide time and space for bonding, thereby increasing the sheet feeding rate. Moreover, since the positive electrode sheet and the first separator and the negative electrode sheet and the second separator are bonded only at the head portions, and the middle portions and tail portions are not bonded, a tension difference generated during the winding process due to differences between the inner side and the outer side can be partially released, reducing the occurrence of wrinkling, and the quality of battery cells can also be improved.

Meanwhile, during the bonding, winding and flying cutting of a previous positive electrode sheet and the first separator, the negative electrode sheet and the second separator, and the first separator and the second separator, the first sheet-clamping and feeding assembly and the second sheet-clamping and feeding assembly in the positive electrode unwinding and cutting device and the negative electrode unwinding and cutting device respectively continue to feed a positive electrode plate and a negative electrode plate, which have been spaced apart from the previous positive electrode sheet and negative electrode sheet, into the first cutting assembly and the second cutting assembly respectively, to perform cutting to form new positive electrode sheets and negative electrode sheets. As the positive electrode sheets, the negative electrode sheets, the first separator and the second separator move forward, bonding, deviation correction, winding and flying cutting are sequentially and continuously performed to obtain battery cells, achieving continuous and uniform sheet feeding and winding. After a previous roll of positive electrode plate and negative electrode plate are unwound, when new rolls need to be replaced, new rolls of positive electrode plate and negative electrode plate can be directly and quickly replaced without needing to stop the machine to replace the positive electrode plate rolls and the negative electrode plate rolls and then accelerate.

It should be noted that in the present invention, a bonding length of the head portion of the positive electrode sheet and the first separator does not exceed a width of one battery cell, and a bonding length of the head portion of the negative electrode sheet and the second separator does not exceed a width of one battery cell. The bonding length of the first separator and the second separator does not exceed the first spacing, and during bonding of the first separator and the second separator, regions of the first separator and the second separator corresponding to the tail portions of a previous positive electrode sheet and negative electrode sheet are not bonded.

In the present invention, the width of a battery cell should be understood as the dimension, along an outer surface of the wound battery cell, in a direction perpendicular to the width direction of the positive and negative electrode sheets.

The continuous sheet-feeding and winding mechanism provided by the present invention can realize continuous and uniform sheet-feeding and winding at a speed of not less than 600 mm/s, and can even realize continuous and uniform sheet-feeding and winding at a speed of not less than 1000 mm/s or even not less than 2000 mm/s; that is, the unwinding speed of the first separator and the second separator can reach not less than 600 mm/s, and can even be higher, such as reaching not less than 1000 mm/s or not less than 2000 mm/s; when the first separator and the positive electrode sheet are bonded, the travel speed of the positive electrode sheet and the first separator can reach not less than 600 mm/s, and can even be higher, such as reaching not less than 1000 mm/s or not less than 2000 mm/s; when the negative electrode sheet and the second separator are bonded, the travel speed of the negative electrode sheet and the second separator can reach not less than 600 mm/s, and can even be higher, such as reaching not less than 1000 mm/s or not less than 2000 mm/s; when the first separator and the second separator are bonded, the travel speed of the positive composite layer and the negative composite layer can reach not less than 600 mm/s, and can even be higher, such as reaching not less than 1000 mm/s or not less than 2000 mm/s; after the positive composite layer and the negative composite layer are bonded, the entry speed into the winding device can be not less than 600 mm/s, and the entry speed can even reach not less than 1000 mm/s or even not less than 2000 mm/s, and continuous and uniform sheet feeding is performed in this process.

Finally, it should be noted that the above embodiments are merely intended to illustrate, rather than limit, the technical solutions of the present invention. although the present invention has been described in detail with reference to the foregoing embodiments, a person of ordinary skill in the art should understand that the technical solutions described in the foregoing embodiments can still be modified, or some or all of the technical features thereof can be equivalently replaced, without causing the essence of the corresponding technical solutions to depart from the scope of the technical solutions of the embodiments of the present invention.

### INDUSTRIAL APPLICABILITY

In summary, the present invention provides a continuous sheet-feeding and winding process that enables deviation correction of the positive and negative electrode sheets and tension adjustment during winding, thereby reducing non-uniform tension and wrinkling. The process can also reduce the time and cost required to bond the positive electrode sheet to the first separator and the negative electrode sheet to the second separator, reduce the difficulty of bonding the electrode sheets and the separators, and increase the winding speed of battery cells.

The present invention further provides a continuous sheet-feeding and winding mechanism that enables continuous, uniform and high-speed feeding, is easy to bond, and is readily implemented and adopted. The mechanism can continuously feed and wind the positive electrode sheet, the negative electrode sheet, the first separator and the second separator at a speed of not less than 600 mm/s, and can even continuously feed and wind them at a speed of not less than 2,000 mm/s.

## Claims

1. A continuous sheet-feeding and winding process, **characterized in that** the process comprises a first bonding process, a second bonding process and a winding and cutting process;
the first bonding process comprises a positive electrode sheet and separator bonding process and a negative electrode sheet and separator bonding process that are performed synchronously; the positive electrode sheet and separator bonding process comprises: bonding a head portion of a positive electrode sheet and a first separator to form a positive composite layer; and the negative electrode sheet and separator bonding process comprises: bonding a head portion of a negative electrode sheet and a second separator to form a negative composite layer, wherein the positive electrode sheet is formed by cutting a positive electrode plate, and the negative electrode sheet is formed by cutting a negative electrode plate;
the second bonding process comprises: bonding the positive composite layer and the negative composite layer to form a combined composite layer; and
the winding and cutting process comprises: feeding the combined composite layer into a winding machine for winding, cutting the combined composite layer, and starting to wind a next battery cell.

2. The continuous sheet-feeding and winding process according to claim 1, wherein in the winding and cutting process, the combined composite layer is fed into the winding machine for winding at a travel speed of not less than 600 mm/s.

3. The continuous sheet-feeding and winding process according to claim 1 or 2, wherein a bonding length of each positive electrode sheet and the first separator is not greater than 1.5 times an outer circumference of a formed battery cell; and/or
a bonding length of each negative electrode sheet and the second separator is not greater than 1.5 times an outer circumference of a formed battery cell; and/or
a bonding length of the positive composite layer and the negative composite layer is not greater than an outer circumference of a formed battery cell.

4. The continuous sheet-feeding and winding process according to claim 3, wherein a bonding area between each positive electrode sheet and the first separator does not exceed an area of an orthogonal projection of a resulting battery cell onto a plane extending in a width direction; and
a bonding area between each negative electrode sheet and the second separator does not exceed the area of the orthogonal projection of the resulting battery cell onto a plane extending in the width direction.

5. The continuous sheet-feeding and winding process according to any one of claims 1-4, wherein the combined composite layer is a composite structure formed by stacking the positive electrode sheet, the first separator, the negative electrode sheet and the second separator that are sequentially arranged;
adjacent positive electrode sheets have a first spacing therebetween; adjacent negative electrode sheets have a second spacing therebetween; and projections of the first spacing and the second spacing in a direction perpendicular to the first separator and the second separator overlap in an overlapping region; and
the positive composite layer and the negative composite layer are partially bonded in the overlapping region, and a gap exists between a bonding region of the positive composite layer and the negative composite layer and a tail portion of the negative electrode sheet.

6. The continuous sheet-feeding and winding process according to claim 5, wherein the bonding region of the positive composite layer and the negative composite layer comprises a first region and a second region, the first region being a part of the overlapping region; the second region comprises a region corresponding to a bonded portion of the positive electrode sheet and the first separator; and the first region and the second region are connected together.

7. The continuous sheet-feeding and winding process according to any one of claims 1-6, wherein the positive composite layer and the negative composite layer corresponding to the tail portion of the positive electrode sheet and the tail portion of the negative electrode sheet are not bonded.

8. The continuous sheet-feeding and winding process according to any one of claims 1-7, wherein the positive composite layer and the negative composite layer are bonded by electrostatic bonding; and/or
the head portion of the positive electrode sheet and the first separator are bonded by heat-press bonding or adhesive bonding, and the head portion of the negative electrode sheet and the second separator are bonded by heat-press bonding or adhesive bonding.

9. A continuous sheet-feeding and winding mechanism, **characterized in that** the mechanism comprises:
an unwinding device, comprising a positive electrode unwinding and cutting device, a negative electrode unwinding and cutting device, a first separator unwinding device and a second separator unwinding device;
a bonding device, disposed downstream of the unwinding device and configured to bond a head portion of a positive electrode sheet with a first separator to form a positive composite layer, bond a head portion of a negative electrode sheet with a second separator to form a negative composite layer, and bond the positive composite layer and the negative composite layer to form a combined composite layer, wherein the positive electrode sheet is formed by cutting a positive electrode plate; and the negative electrode sheet is formed by cutting a negative electrode plate; and
a winding device, disposed downstream of the bonding device and configured to cut the first separator and the second separator and perform winding to form a battery cell,
wherein, when the positive electrode sheet/the negative electrode sheet is bonded to the first separator/the second separator, the head portion is a portion on the side close to the movement direction of the positive electrode sheet/the negative electrode sheet.

10. The continuous sheet-feeding and winding mechanism according to claim 9, wherein the bonding device comprises a first bonding device, a second bonding device and a third bonding device, the first bonding device being configured to bond a head portion of the positive electrode sheet and the first separator to form a positive composite layer;
the second bonding device being configured to bond a head portion of the negative electrode sheet and the second separator to form a negative composite layer; and
the third bonding device being located downstream of the first bonding device and the second bonding device and configured to bond the positive composite layer and the negative composite layer to form a combined composite layer.

11. The continuous sheet-feeding and winding mechanism according to claim 10, wherein the first bonding device is a heat-press bonding device or an adhesive bonding device;
the second bonding device is a heat-press bonding device or an adhesive bonding device; and
the third bonding device is a heat-press bonding device or an electrostatic bonding device.

12. The continuous sheet-feeding and winding mechanism according to claim 10 or 11, wherein the first bonding device comprises a first bonding assembly, a first driver and a first timer; the first bonding assembly comprises a first bonding member and a second bonding member, and a gap through which the positive electrode sheet and the first separator pass is provided between the first bonding member and the second bonding member; the first driver is connected to the first bonding member and drives the first bonding member to contact or move away from the first separator, such that the gap between the first bonding member and the second bonding member is not greater than a sum of the thicknesses of the positive electrode sheet and the first separator; and the first timer is configured to record a time at which the first bonding assembly contacts or moves away from the first separator;
the second bonding device comprises a second bonding assembly, a third driver and a second timer; the second bonding assembly comprises a third bonding member and a fourth bonding member, and a gap through which the negative electrode sheet and the second separator pass is provided between the third bonding member and the fourth bonding member; the third driver is connected to the third bonding member and drives the third bonding member to contact or move away from the second separator, such that the gap between the third bonding member and the fourth bonding member is not greater than the sum of the thicknesses of the negative electrode sheet and the second separator; and the second timer is configured to record the time at which the second bonding assembly contacts or moves away from the second separator;
the third bonding device comprises a fifth bonding member, a sixth bonding member, a fifth driver, a sixth driver and a third timer, and a gap through which the positive composite layer and the negative composite layer pass is provided between the fifth bonding member and the sixth bonding member; the fifth driver is connected to the fifth bonding member and drives the fifth bonding member to contact or move away from the first separator or the positive electrode sheet; and/or
the sixth driver is connected to the sixth bonding member and drives the sixth bonding member to contact or move away from the second separator, thereby bringing the first separator or the positive electrode sheet into contact with the second separator; and the third timer is configured to record the time at which the fifth bonding member contacts or moves away from the first separator or the positive electrode sheet, or the time at which the sixth bonding member contacts or moves away from the second separator.

13. The continuous sheet-feeding and winding mechanism according to claim 12, wherein the first bonding device comprises a first heating assembly, the first heating assembly being disposed on the first bonding assembly and configured to heat the first bonding assembly;
the second bonding device comprises a second heating assembly, the second heating assembly being disposed on the second bonding assembly and configured to heat the second bonding assembly; and
the third bonding device comprises a third heating assembly and a fourth heating assembly, the third heating assembly and the fourth heating assembly being respectively disposed on the fifth bonding member and the sixth bonding member and configured to heat the fifth bonding member and the sixth bonding member.

14. The continuous sheet-feeding and winding mechanism according to claim 12 or 13, wherein the first bonding device further comprises a seventh driver, and the seventh driver drives the first bonding assembly to move in the movement direction of the positive electrode sheet, with a movement speed of the first bonding assembly being equal to a movement speed of the positive electrode sheet;
the second bonding device further comprises an eighth driver, and the eighth driver drives the second bonding assembly to move in the movement direction of the negative electrode sheet, with a movement speed of the second bonding assembly being equal to a movement speed of the negative electrode sheet; and
the third bonding device comprises a ninth driver, and the ninth driver drives the fifth bonding member and the sixth bonding member to move in the movement direction of the combined composite layer, with movement speeds of the fifth bonding member and the sixth bonding member being equal to a movement speed of the combined composite layer.

15. The continuous sheet-feeding and winding mechanism according to any one of claims 10-14, wherein the mechanism further comprises a controller, and the controller is in communication connection with the first bonding device, the second bonding device and the third bonding device.

16. The continuous sheet-feeding and winding mechanism according to any one of claims 9-15, wherein the positive electrode unwinding and cutting device comprises a positive electrode unwinding assembly, a first buffer assembly, a first sheet-clamping and feeding assembly and a first cutting assembly that are sequentially arranged; the positive electrode unwinding assembly unwinds the positive electrode plate to the first cutting assembly, and the first cutting assembly cuts the positive electrode plate to form positive electrode sheets; the first buffer assembly is located between the positive electrode unwinding assembly and the first cutting assembly and configured to increase a distance between adjacent positive electrode sheets; and the first sheet-clamping and feeding assembly is located between the first buffer assembly and the first cutting assembly and configured to clamp and feed the positive electrode sheets to the first cutting assembly; and
the negative electrode unwinding and cutting device comprises a negative electrode unwinding assembly, a second buffer assembly, a second sheet-clamping and feeding assembly and a second cutting assembly; the negative electrode unwinding assembly unwinds the negative electrode plate to the second cutting assembly, and the second cutting assembly cuts the negative electrode plate to form negative electrode sheets; the second buffer assembly is located between the negative electrode unwinding assembly and the second cutting assembly and configured to increase a distance between adjacent negative electrode sheets; and the second sheet-clamping and feeding assembly is located between the second buffer assembly and the second cutting assembly and configured to clamp and feed the negative electrode sheets to the second cutting assembly.

17. The continuous sheet-feeding and winding mechanism according to claim 16, wherein a first deviation correction assembly is further disposed between the first buffer assembly and the first cutting assembly; and
a second deviation correction assembly is further disposed between the second buffer assembly and the second cutting assembly.

18. The continuous sheet-feeding and winding mechanism according to any one of claims 9-17, wherein the first separator unwinding device and the second separator unwinding device synchronously and continuously unwind at a uniform speed;
and the unwinding speeds of the first separator unwinding device and the second separator unwinding device are equal to the travel speeds of the negative composite layer and the positive composite layer in the bonding device.

19. The continuous sheet-feeding and winding mechanism according to any one of claims 9-18, wherein the unwinding speed of the positive electrode sheet, the unwinding speed of the negative electrode sheet, the unwinding speed of the first separator and the unwinding speed of the second separator are all not less than 600 mm/s.
